# EUROPEAN PATENT SPECIFICATION

(11) **EP 1 369 011 B1**
(45) Date of publication and mention of the grant of the patent: **19.09.2007**
(21) Application number: 03076217.3
(22) Date of filing: 28.04.2003
(51) Int. Cl.: A01B 79/00

(54) **An agricultural machine for performing an agricultural operation**
Landwirtschaftliche Maschine
Machine agricole

(30) Priority: 06.06.2002 NL 1020792
(43) Date of publication of application: 10.12.2003
(73) Proprietor: Lely Enterprises AG, 6300 ZUG (CH)
(72) Inventor: Miedema, Theo Jan, 2676 VB Maasdijk (NL); van den Berg, Karel, 2971 BR Bleskensgraaf (NL)
(74) Representative: Corten, Maurice Jean F.M.

(56) References cited:
- WO-A-98/46065
- DE-A- 4 318 798
- DE-A- 10 016 688
- DE-A- 19 614 916
- US-A- 4 769 700
- US-A1- 2002 049 522
- US-B1- 6 278 918

## Description

The invention relates to an agricultural machine for performing an agricultural operation according to the preamble of claim 1.

Such an agricultural machine is generally known. With such an agricultural machine it is principally the driver who is responsible for the safety of the environment (in particular living beings).

The invention aims inter alia at providing an agricultural machine for performing an agricultural operation, by means of which an improved safety can be achieved.

For this purpose, according to the invention an agricultural machine of the above-described type comprises the features of the characterizing part of claim 1. The invention is based on the insight that the expected braking distance of the agricultural machine does not only depend on the position of the agricultural machine in the agricultural parcel, but also on the direction of travel, for example uphill and downhill. By means of the invention safety is improved in that the agricultural machine is provided with a braking-distance-determining element for determining the braking distance of the agricultural machine.

In an advantageous embodiment of an agricultural machine according to the invention the measuring range of the environment-sensor is adjustable with the aid of data from the braking-distance-determining element, in order to make it possible to stop the agricultural machine and to take other safety measures, if necessary, before the detected object has been reached.

It is in particular advantageous if the measuring range of the environment-sensor is adjustable with the aid of data from the direction-of-travel-determining element, in order that the environment is always detected in the direction of travel.

If the environment-sensor is movably disposed on the agricultural machine, the sensor can always be brought into a desired position. The environment-sensor is in particular movable with the aid of data from the direction-of-travel-determining element.

According to the invention the agricultural machine is provided with a position-determining element for determining the position of the agricultural machine in the agricultural parcel.

Although for some agricultural parcels one value of the environment-property may be applied to the entire parcel (for example the colour), for improving safety it is advantageous if the memory is suitable for containing nominal values of the environment-property per position in the agricultural parcel. In this manner, for taking safety measures, it is possible to take into account the values of the environment-property that may be different per position in the agricultural parcel.

Although it is possible to change the direction of travel of the agricultural machine with the aid of data from the comparator, for further improvement of safety the agricultural machine preferably comprises a switch for deactivating the agricultural operation and/or the movement of the agricultural machine with the aid of data from the comparator. In this manner it is possible to stop the agricultural machine and/or the operation independently of the direction of travel. The agricultural machine preferably comprises a switch for deactivating the agricultural operation and/or the movement of the agricultural machine with the aid of data from the direction-of-travel-determining element.

The invention can in particular be applied if the agricultural machine is an autonomous agricultural machine, i.e. an agricultural machine that does not require a driver for being moved.

The invention will be explained hereinafter in further detail with reference to the embodiments shown in the drawing, in which:

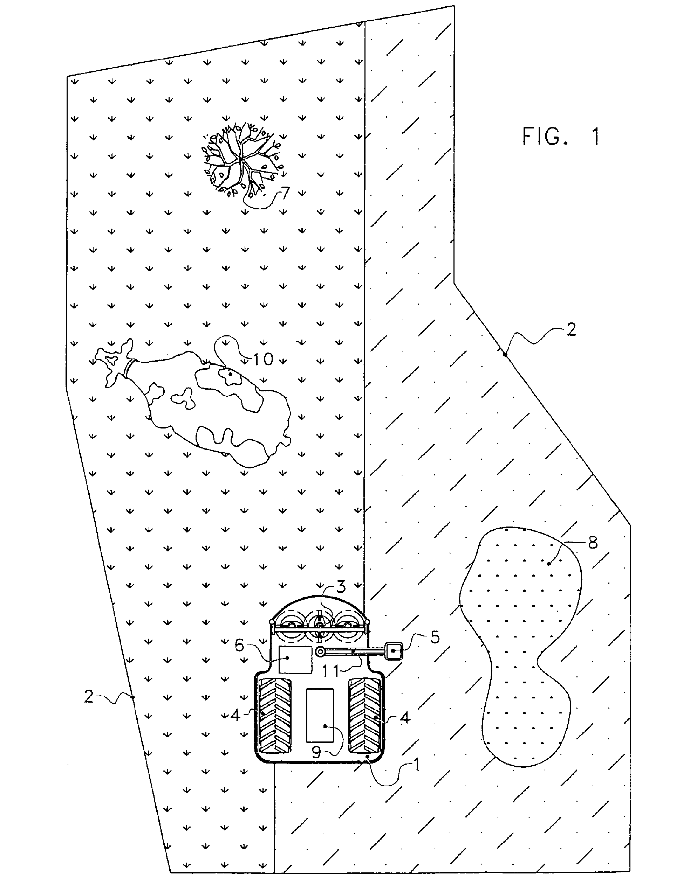

Figure 1 shows schematically in plan view an autonomous agricultural machine in an agricultural parcel in an embodiment of the invention.

Figure 1 shows schematically in plan view an autonomous agricultural machine 1 in an agricultural parcel 2 in an embodiment of the invention. Although the invention will be described with reference to an autonomous agricultural machine, it will be obvious that the invention is not limited thereto. It is pointed out here that an autonomous machine, i.e. a machine that does not require a driver for being moved, is known per se and will therefore not be set out here in further detail for the sake of simplicity of the description. The autonomous agricultural machine 1 is suitable for performing a crop-processing operation on a crop that is present on the agricultural parcel 2. In the embodiment shown the autonomous agricultural machine 1 is an autonomous mowing machine that mows crop that is present on the agricultural parcel 2 by means of a mowing unit 3. Although several sorts of mowing units known per se may be used, in the embodiment shown the mowing unit 3 is constituted by mowing discs that are present on a cutter bar and are rotatable about an axis, which mowing discs are provided with mowing knives. It will be obvious that the agricultural machine may also be an agricultural machine for performing other crop-processing operations.

The agricultural machine 1 is supported and moved over the agricultural parcel 2 by means of wheels 4. The autonomous agricultural machine 1 further comprises an environment-sensor 5 for measuring a current value of an environment-property. In the embodiment shown the environment-sensor 5 is a colour-sensor for measuring the colour. However, it will be obvious that also other sensors, such as sensors that are suitable for measuring structure, temperature, size, humidity content and the like, are applicable within the scope of the invention. The agricultural machine 1 further comprises a memory 6 for containing a nominal value of the environment-property. In the present case the memory is suitable for containing nominal values of the environment-property per position in the agricultural parcel 2, so that a tree 7, a pond 8 and the remaining part of the agricultural parcel 2 can be distinguished from each other. The data may be stored for example in the form of a ground plan in which the parts 7, 8 of the agricultural parcel 2 are indicated by different colours.

The agricultural machine 1 further comprises a comparator 9 for comparing the measured current value of the environment-property, for example a measurement of the colour of a cow 10 present in the agricultural parcel, with the stored nominal value of the environment-property. For this purpose the agricultural machine further comprises a (non-shown) position-determining element that is known per se for determining the position of the autonomous agricultural machine 1 in the agricultural parcel 2 by means of for example a GPS-system. Said position-determining element may also be used as direction-of-travel-determining element for determining the direction of travel of the agricultural machine 1. This makes it possible to take relevant safety measures when the agricultural machine 1 comes too near to the cow 10, or the pond 8 or the tree 7.

The agricultural operation and/or the movement of the agricultural machine are/is stopped in particular with the aid of data from the comparator 9, preferably in combination with data from the direction-of-travel-determining element or the position-determining element.

As the expected braking distance of the agricultural machine 1 inter alia depends on the position of the agricultural machine 1 in the agricultural parcel 2 (for example, the agricultural machine moves slower in loose soil than on a hard soil surface) and on the direction of travel (for example, uphill and downhill the braking distances and driving speeds are different), by means of the position-determining element as braking-distance-determining element, the expected braking distance of the agricultural machine 1 is continuously determined per position in the agricultural parcel 2. This makes it possible to take a specific safety measure in dependence on the expected speed.

The measuring range of the environment-sensor 5 is adjustable by placing for example different collecting lenses before the sensor. The measuring range of the environment-sensor is in particular adjustable with the aid of data from the braking-distance-determining element, in order that, if the braking distance is long, there is detected at a further distance in front of the agricultural machine than if the braking distance is short. In this manner it is possible timely to stop the agricultural machine and/or to take other safety measures, if necessary, before the detected object has been reached.

The environment-sensor 5 is disposed on the agricultural machine 1 so as to be movable on a rotatable arm 11. By making use of the position-determining element, it is possible to determine the direction of travel of the agricultural machine, and it is possible to rotate the arm 11 in such a way that the measuring range of the sensor is situated in the direction of travel of the agricultural machine.

## Claims

1. An agricultural machine (1) for performing an agricultural operation, which agricultural machine is movable over an agricultural parcel and is provided with an environment-sensor (5) for measuring a current value of an environment-property, with a memory (6) for containing a nominal value of the environment-property, with a comparator (9) for comparing the measured current value of the environment-property with the stored nominal value of the environment-property, with a direction-of-travel-determining element for determining the direction of travel of the agricultural machine and with a position-determining element for determining the position of the agricultural machine in the agricultural parcel, **characterized in that** said agricultural machine comprises a braking-distance-determining element for continuously determining the braking distance of the agricultural machine per position of the agricultural machine from data supplied by said direction-of-travel-determining element for determining the direction of travel of the agricultural machine and said position-determining element for determining the position of the agricultural machine in the agricultural parcel.

2. An agricultural machine as claimed in claim 1, **characterized in that** the measuring range of the environment-sensor is adjustable with the aid of data from the braking-distance-determining element.

3. An agricultural machine as claimed in claim 1 or 2, **characterized in that** the measuring range of the environment-sensor is adjustable with the aid of data from the direction-of-travel-determining element.

4. An agricultural machine as claimed in any one of the preceding claims, **characterized in that** the environment-sensor (5) is movably disposed on the agricultural machine.

5. An agricultural machine as claimed in claim 4, **characterized in that** the environment-sensor (5) is movable with the aid of data from the direction-of-travel-determining element.

6. An agricultural machine as claimed in claim 3, **characterized in that** the memory (6) is suitable for containing nominal values of the environment-property per position in the agricultural parcel.

7. An agricultural machine as claimed in any one of the preceding claims, **characterized in that** the agricultural machine comprises a switch for deactivating the agricultural operation and/or the movement of the agricultural machine with the aid of data from the comparator (9).

8. An agricultural machine as claimed in claim 7, **characterized in that** the agricultural machine comprises a switch for deactivating the agricultural operation and/or the movement of the agricultural machine partially with the aid of data from the direction-of-travel-determining element.

9. An agricultural machine as claimed in any one of the preceding claims, **characterized in that** the agricultural machine is an autonomous agricultural machine.

## Patentansprüche

1. Landwirtschaftliche Maschine (1) zum Durchführen einer landwirtschaftlichen Tätigkeit, wobei die landwirtschaftliche Maschine über eine landwirtschaftliche Parzelle bewegbar ist und mit einem Umgebungssensor (5) zum Messen eines gegenwärtigen Wertes einer Umgebungsbeschaffenheit versehen ist, mit einem Speicher (6) zum Speichern eines Sollwertes der Umgebungsbeschaffenheit, mit einem Komparator (9) zum Vergleichen des gemessenen gegenwärtigen Wertes der Umgebungsbeschaffenheit mit dem gespeicherten Sollwert der Umgebungsbeschaffenheit, mit einem Fahrtrichtungs-Ermittlungselement zum Ermitteln der Fahrtrichtung der landwirtschaftlichen Maschine und mit einem Positionsermittlungselement zum Ermitteln der Position der landwirtschaftlichen Maschine auf der landwirtschaftlichen Parzelle,
**dadurch gekennzeichnet, dass** die landwirtschaftliche Maschine ein Bremsweg-Ermittlungselement umfasst, um kontinuierlich den Bremsweg der landwirtschaftlichen Maschine für jede Position der landwirtschaftlichen Maschine aus Daten zu ermitteln, die von dem Fahrtrichtungs-Ermittlungselement zum Ermitteln der Fahrtrichtung der landwirtschaftlichen Maschine und von dem Positionsermittlungselement zum Ermitteln der Position der landwirtschaftlichen Maschine auf der landwirtschaftlichen Parzelle geliefert werden.

2. Landwirtschaftliche Maschine nach Anspruch 1,
**dadurch gekennzeichnet, dass** der Messbereich des Umgebungssensors mit Hilfe von Daten von dem Bremsweg-Ermittlungselement einstellbar ist.

3. Landwirtschaftliche Maschine nach Anspruch 1 oder 2,
**dadurch gekennzeichnet, dass** der Messbereich des Umgebungssensors mit Hilfe von Daten von dem Fahrtrichtungs-Ermittlungselement einstellbar ist.

4. Landwirtschaftliche Maschine nach einem der vorhergehenden Ansprüche,
**dadurch gekennzeichnet, dass** der Umgebungssensor (5) an der landwirtschaftlichen Maschine beweglich angeordnet ist.

5. Landwirtschaftliche Maschine nach Anspruch 4,
**dadurch gekennzeichnet, dass** der Umgebungssensor (5) mit Hilfe von Daten von dem Fahrtrichtungs-Ermittlungselement bewegbar ist.

6. Landwirtschaftliche Maschine nach Anspruch 3,
**dadurch gekennzeichnet, dass** der Speicher (6) geeignet ist, Sollwerte der Umgebungsbeschaffenheit für jede Position der landwirtschaftlichen Parzelle zu speichern.

7. Landwirtschaftliche Maschine nach einem der vorhergehenden Ansprüche,
**dadurch gekennzeichnet, dass** die landwirtschaftliche Maschine einen Schalter umfasst, um die landwirtschaftliche Tätigkeit und/oder die Bewegung der landwirtschaftlichen Maschine mit Hilfe von Daten von dem Komparator (9) zu deaktivieren.

8. Landwirtschaftliche Maschine nach Anspruch 7,
**dadurch gekennzeichnet, dass** die landwirtschaftliche Maschine einen Schalter umfasst, um die landwirtschaftliche Tätigkeit und/oder die Bewegung der landwirtschaftlichen Maschine teilweise mit Hilfe von Daten von dem Fahrtrichtungs-Ermittlungselement zu deaktivieren.

9. Landwirtschaftliche Maschine nach einem der vorhergehenden Ansprüche,
**dadurch gekennzeichnet, dass** die landwirtschaftliche Maschine eine autonome landwirtschaftliche Maschine ist.

## Revendications

1. Machine agricole (1) permettant d'exécuter une opération agricole, laquelle machine agricole peut être déplacée sur une parcelle agricole et comporte un capteur d'environnement (5) permettant de mesurer une valeur actuelle d'une propriété de l'environnement, une mémoire (6) permettant de contenir une valeur nominale de la propriété de l'environnement, un comparateur (9) permettant de comparer la valeur actuelle mesurée de la propriété de l'environnement avec la valeur nominale enregistrée de la propriété de l'environnement, un élément de détermination du sens de déplacement permettant de déterminer le sens de déplacement de la machine agricole et un élément de détermination de position permettant de déterminer la position de la machine agricole dans la parcelle agricole, **caractérisée en ce que** ladite machine agricole comprend un élément de détermination de la distance de freinage servant à déterminer en continu la distance de freinage de la machine agricole par position de la machine agricole à partir des données fournies par ledit élément de détermination du sens de déplacement permettant de déterminer le sens de déplacement de la machine agricole et ledit élément de détermination de position permettant de déterminer la position de la machine agricole dans la parcelle agricole.

2. Machine agricole selon la revendication 1, **caractérisée en ce que** la plage de mesure du capteur d'environnement est réglable à l'aide des données provenant de l'élément de détermination de la distance de freinage.

3. Machine agricole selon la revendication 1 ou 2, **caractérisée en ce que** la plage de mesure du capteur d'environnement est réglable à l'aide des données provenant de l'élément de détermination du sens de déplacement.

4. Machine agricole selon l'une quelconque des revendications précédentes, **caractérisée en ce que** le capteur d'environnement (5) est disposé de manière amovible sur la machine agricole.

5. Machine agricole selon la revendication 4 **caractérisée en ce que** le capteur d'environnement (5) peut se déplacer à l'aide des données provenant de l'élément de détermination du sens de déplacement.

6. Machine agricole selon la revendication 3, **caractérisée en ce que** la mémoire (6) est adaptée pour contenir des valeurs nominales de la propriété de l'environnement par position dans la parcelle agricole.

7. Machine agricole selon l'une quelconque des revendications précédentes, **caractérisée en ce que** la machine agricole comprend un interrupteur pour désactiver l'opération agricole et/ou le mouvement de la machine agricole à l'aide des données provenant du comparateur (9).

8. Machine agricole selon la revendication 7, **caractérisée en ce que** la machine agricole comprend un interrupteur permettant de désactiver l'opération agricole et/ou le mouvement de la machine agricole partiellement à l'aide des données provenant de l'élément de détermination du sens de déplacement.

9. Machine agricole selon l'une quelconque des revendications précédentes, **caractérisée en ce que** la machine agricole est une machine agricole autonome.
